# FASCICULE DE BREVET EUROPEEN

(11) **EP 0 938 412 B1**
(45) Date de publication et mention de la délivrance du brevet: **11.02.2004**
(21) Numéro de dépôt: 96934316.9
(22) Date de dépôt: 12.11.1996
(51) Int. Cl.: B32B 31/20, G06K 19/077

(54) **Procédé de fabrication de cartes**
Verfahren zum Herstellen von Karten
Method for making cards

(43) Date de publication de la demande: 01.09.1999
(73) Titulaire: NagraID S.A., 2301 La Chaux-de-Fonds (CH)
(72) Inventeur: Droz, Francois, 2300 La Chaux-de-Fonds (CH)
(74) Mandataire: Wenger, Joel-Théophile
(86) Numéro de dépôt international: PCT/CH1996/000404
(87) Numéro de publication internationale: WO 1998/021036

(56) Documents cités:
- EP-A- 0 249 526
- EP-A- 0 658 424
- DE-A- 4 441 552
- FR-A- 2 161 663
- GB-A- 1 482 760
- US-A- 3 901 639
- US-A- 4 172 750

## Description

La présente invention concerne un procédé de fabrication de cartes selon le préambule de la revendication 1. Plus précisément, la présente invention concerne un procédé de fabrication de cartes, en particulier de cartes à puces ou de cartes bancaires, laminées par pressage à froid.

Bien que la description décrive surtout le cas particulier de la fabrication de cartes à puces, l'invention peut aussi s'appliquer à la fabrication de n'importe quel autre type de cartes laminées, par exemple des cartes bancaires, téléphoniques ou des cartes de visite plastifiées. Toutefois, l'invention se révèle plus particulièrement avantageuse pour la fabrication de cartes destinées à être utilisées dans un lecteur ou un automate, en particulier pour des cartes comportant une portion de stockage optique, magnétique ou électronique.

La plupart des cartes à puces connues sont fabriquées par laminage de couches de matériaux divers tel que chlorure de polyvinyle (PVC), polycarbonate (PC) ou ABS, une des couches au moins logeant un circuit intégré. Parmi les procédés de fabrication connus, on distingue notamment les procédés de laminage à chaud et les procédés de laminage par pressage à froid.

Selon les procédés de laminage à chaud, les multiples couches constituant une carte sont pressées entre deux plaques et simultanément chauffées à une température généralement proche de 160° permettant de fusionner les couches mutuellement. Parfois, une deuxième presse à froid est utilisée après la première afin de refroidir l'ensemble des couches. De tels procédés sont mentionnés notamment dans les documents de brevet WO94/22111, DE4444788, EP0163534, EP0488574.

Ces procédés sont difficiles à utiliser pour fabriquer des cartes à puce comprenant des composants électroniques fragiles qui risquent d'être détruits par la chaleur et la pression importantes nécessaires. En particulier, ces procédés sont mal adaptés à la fabrication de cartes comprenant un accumulateur ou une batterie ne supportant pas la chaleur importante dégagée.

Pour cette raison, on préfère parfois les procédés de laminage par pressage à froid. Selon ces procédés, les différentes couches constituant les cartes sont assemblées mutuellement au moyen d'un liant ou d'une colle durcissant à une température inférieure à la température de fusion des couches constituant la carte. WO94/22110 décrit un exemple de procédé de ce type. Les différentes couches ainsi que le circuit sont comprimées dans une presse en contrôlant précisément l'épaisseur et la répartition du liant.

Les faces externes de la carte doivent être parfaitement planes. C'est en particulier le cas si la carte doit être utilisée dans un automate. Dans ce but, les fabricants de cartes utilisent pour les faces externes des feuilles synthétiques qui ont subi un traitement de surface préalable. Celui-ci peut par exemple consister en un pressage à chaud des feuilles synthétiques contre une plaque de lissage, par exemple contre une plaque de lissage polie qui permet d'effacer les irrégularités de surface. Après lissage, les feuilles synthétiques sont refroidies, décollées de la surface métallique polie et empilées ou parfois enroulées sur elles-mêmes en vue de leur commercialisation et de leur transport jusqu'au fabricant de cartes. Les feuilles synthétiques obtenues doivent être suffisamment lisses pour être utilisées comme couches externes du laminé.

La présente invention concerne une amélioration aux procédés de fabrications de cartes. En particulier, l'invention concerne un perfectionnement à ces procédés particulièrement avantageux lorsqu'il est appliqué à la fabrication de cartes destinées à être utilisées dans des automates.

Selon l'invention, cette amélioration est apportée grâce aux éléments de la partie caractérisante de la revendication 1.

Plus précisément, cette amélioration est apportée en effectuant l'opération de laminage par pressage à froid des différentes couches et éléments constituant la carte laminée entre la plaque de lissage utilisée au cours de l'opération préalable de lissage par pressage à chaud et au moins une autre plaque. De cette manière, les feuilles synthétiques constituant les couches externes de la carte laminée sont protégées par les plaques de lissage pendant le transport et le pressage à froid. Il est ainsi impossible que les surfaces externes de ces feuilles se rayent ou se couvrent de poussière avant ou au cours de l'opération de laminage par pressage à froid.

Par pressage à froid, on entend un pressage sans apport de chaleur, ou du moins un pressage effectué à une température inférieure à la température de fusion des couches externes du laminé. Si les couches externes sont en PVC, le laminage est donc effectué à une température inférieure à 140° ou de préférence inférieure à 120°.

D'autres avantages et particularités de l'invention ressortiront des revendications dépendantes et de la description donnée à titre d'exemple et illustrée par les figures qui montrent:
La figure 1 une vue en éclaté des différentes couches constituant une carte à puce.
La figure 2a une coupe schématique à travers la deuxième feuille synthétique avant l'opération de lissage à chaud selon une première variante de l'invention.
La figure 3a une coupe schématique à travers une feuille synthétique au cours de l'opération de lissage à chaud selon la première variante de l'invention.
La figure 4a une coupe schématique à travers une feuille synthétique après l'opération de lissage à chaud selon la première variante de l'invention.
La figure 5a une coupe schématique à travers les diverses couches constituant la carte avant l'opération de laminage par pressage à froid selon la première variante de l'invention.
La figure 6a une coupe schématique à travers les diverses couches constituant la carte au cours de l'opération de laminage par pressage à froid selon la première variante de l'invention.

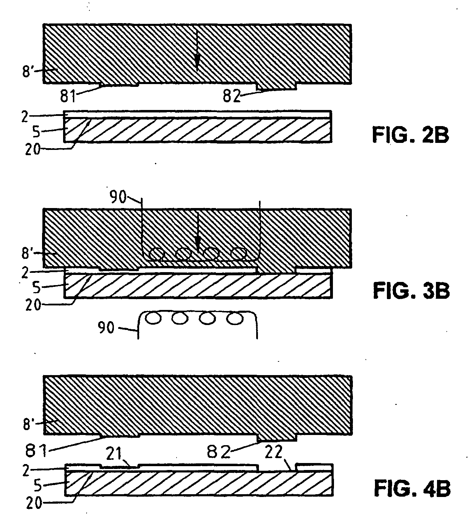

La figure 2b une coupe schématique à travers les diverses couches constituant la carte avant l'opération de lissage à chaud selon une deuxième variante de l'invention.
La figure 3b une coupe schématique à travers une feuille synthétique au cours de l'opération de lissage à chaud selon la deuxième variante de l'invention.
La figure 4b une coupe schématique à travers une feuille synthétique après l'opération de lissage à chaud selon la deuxième variante de l'invention.

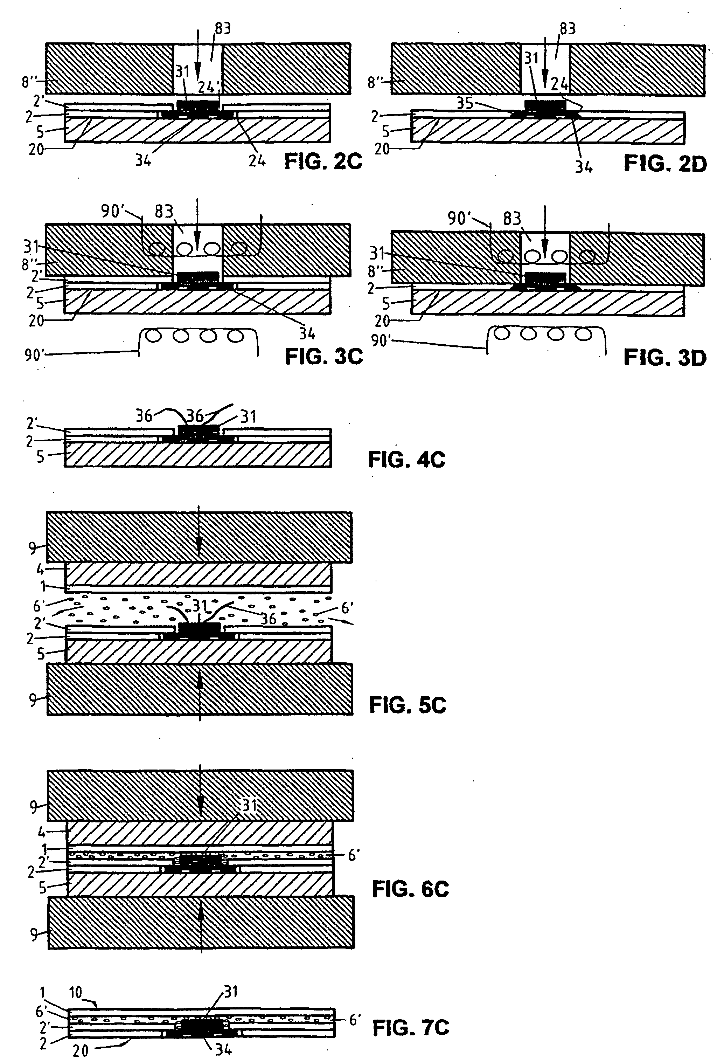

La figure 2c une coupe schématique à travers deux feuilles synthétiques avant l'opération de lissage à chaud selon une troisième variante de l'invention.
La figure 3c une coupe schématique à travers deux feuilles synthétiques au cours de l'opération de lissage à chaud selon la troisième variante de l'invention.
La figure 4c une coupe schématique à travers deux feuilles synthétiques après l'opération de lissage à chaud selon la troisième variante de l'invention.
La figure 5c une coupe schématique à travers les diverses couches constituant la carte avant l'opération de laminage par pressage à froid selon la troisième variante de l'invention.
La figure 6c une coupe schématique à travers les diverses couches constituant la carte au cours de l'opération de laminage par pressage à froid selon la troisième variante de l'invention.

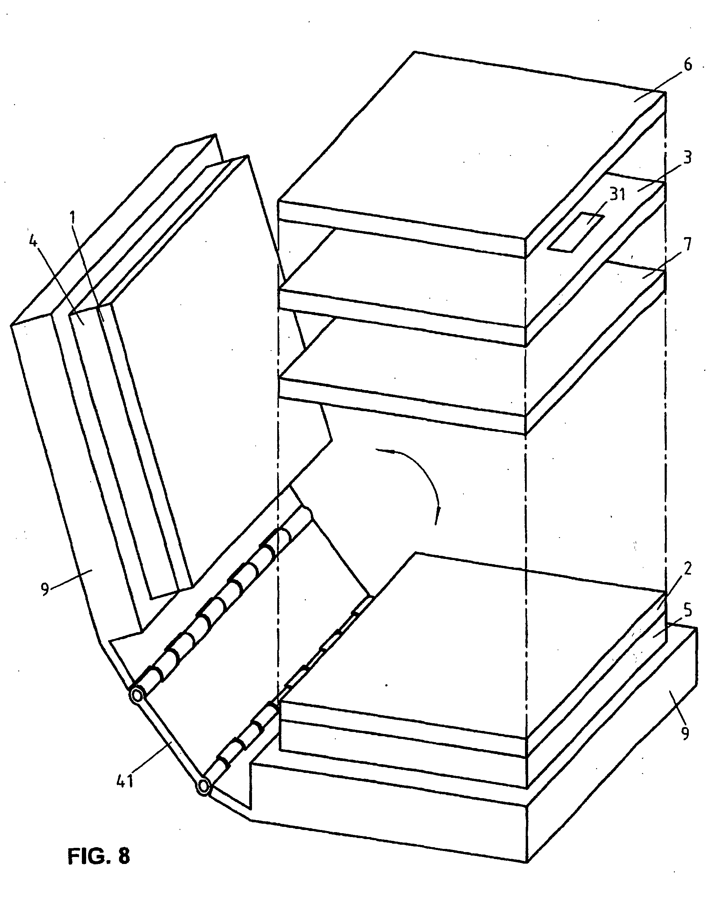

La figure 7c une coupe schématique à travers une carte terminée après l'opération de laminage par pressage à froid selon la troisième variante de l'invention.
La figure 2d une coupe schématique à travers une feuille synthétique avant l'opération de pressage à chaud selon une quatrième variante de l'invention.
La figure 3d une coupe schématique à travers une feuille synthétique au cours de l'opération de lissage à chaud selon la quatrième variante de l'invention.
La figure 8 une vue en perspective de moyens de superposition des feuilles.

Les figures sont schématiques. Il n'est donc généralement pas possible d'en déduire des dimensions. En particulier, l'épaisseur des cartes sur les vues en coupe a été volontairement exagérée afin de bien montrer les différentes couches. Dans la pratique, les cartes auront généralement les dimensions standardisées ISO de 53,98 x 85,60 x 0,76 mm.

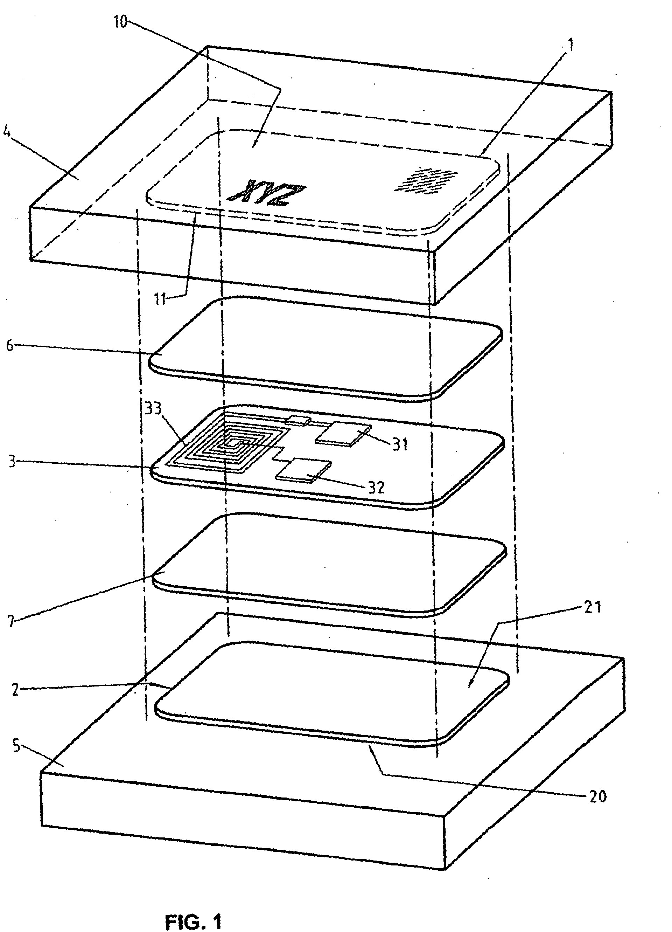

La figure 1 illustre en éclaté différentes couches de cartes à puce fabriquées par laminage par pressage à froid. La couche supérieure 1 est constituée par une feuille synthétique, par exemple en chlorure de polyvinyle (PVC), polycarbonate (PC) ou ABS, découpée aux dimensions requises. La face externe 10 peut être imprimée, par exempte avec le nom du titulaire et de l'institut bancaire s'il s'agit d'une carte bancaire. Dans une variante, la couche supérieure 1 est transparente et l'impression peut être prévue sur la face interne 11. La face externe 10 doit être aussi lisse que possible pour des raisons esthétiques, pour que la carte puisse être lue et écrite facilement dans des automates et pour faciliter l'impression et la personnalisation ultérieure de la carte.

La couche inférieure 2 est similaire et symétrique à la couche supérieure 1; de la même façon, la face externe 20, qui doit être aussi lisse que possible, peut être munie d'une impression et éventuellement d'une zone magnétique ou optique de stockage de données. La face interne de la couche 2 est désignée par le numéro 21.

Dans le cas d'une carte à puce, des contacts électriques peuvent si nécessaire être prévus au moins sur une des faces externes 10 ou 20. On connaît également des cartes dont les faces externes sont munies de cellules photovoltaïques permettant d'alimenter un circuit électronique dans la carte.

La couche 3 est munie de différents composants électroniques 31, 32, 33 représentés schématiquement et reliés entre eux. Les composants électroniques peuvent par exemple comporter des circuits intégrés tels que mémoires, microprocesseurs ou microcontrôleurs, des bobines, des accumulateurs, etc..

Les couches 1, 2 et 3 sont maintenues ensemble grâce à deux couches de liant 6 et 7. Les couches 6 et 7 peuvent être par exemple constituées par des feuilles adhésives double face ou par un liant sous forme de feuille solide ou visqueuse. Il est cependant aussi possible d'utiliser n'importe quel type de liant, par exemple une colle à deux composants, une colle à froid (c'est-à-dire durcissant à une température inférieure à la température de fusion des couches 1 et 2), ou une résine durcissant à l'air, aux ultraviolets ou avec des agents photoinitiateurs. Les couches externes 1, 2 dont la surface est critique reposent lors du pressage à froid sur les plaques de lissage 4, 5 utilisées pour le lissage des couches externes 10, 20. Une pression est exercée sur les couches 1 à 7 pour les lier et assurer une bonne adhérence.

Cette configuration de carte à puce n'est donnée qu'à titre d'exemple illustratif. Selon les besoins, l'invention peut aussi s'appliquer à des cartes à puce comprenant des couches différentes, par exemple des couches de positionnement, des couches compressibles, d'autres éléments électroniques, etc.. L'invention s'applique aussi à la fabrication de cartes formées uniquement de deux couches externes 1, 2 laminées entre elles. Il est aussi possible d'utiliser l'invention pour fabriquer des cartes formées de deux couches externes 1, 2 assemblées par une couche de liant 6 enrobant différents composants électroniques.

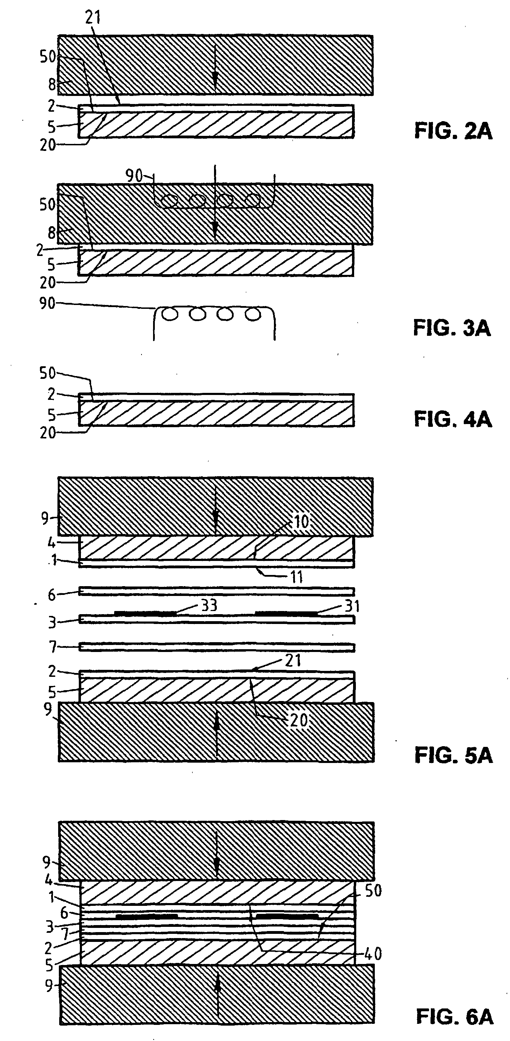

Les figures 2a et 3a illustrent l'opération de lissage par pressage à chaud de la couche inférieure 2. La feuille synthétique 2 est tout d'abord placée sur une plaque de lissage 5. La plaque de lissage 5 est de préférence constituée par une plaque en acier inoxydable avec une surface supérieure 50 polie ou satinée; une plaque de pressage 8 permet d'appliquer une pression (symbolisée par une flèche) sur la feuille 2. Le revêtement de la plaque 8 est non adhésif; il n'est pas nécessaire qu'il soit particulièrement poli. Pour faciliter le décollement ultérieur de la feuille synthétique 2, il est possible d'utiliser une feuille intermédiaire non adhérente entre la plaque de pressage B et la feuille 2, par exemple un film polyamide non adhérent. Si la plaque de lissage 5 est trop fine pour supporter sans déformation la pression de la plaque de pressage 8, on utilisera une plaque de soutien non représentée sous la plaque de lissage 5. Des moyens de chauffage 90 sont prévus pour ramollir la feuille 2. Les moyens de chauffage sont ici représentés par un filament électrique; toutefois, d'autres moyens peuvent être utilisés, par exemple un chauffage à la vapeur, etc. La pression et la température choisies dépendent du matériau utilisé pour la feuille 2; toutefois, comme dans cette variante aucun composant électronique n'est monté sur la feuille 2 au cours du chauffage, il est possible d'utiliser des températures supérieures à la température de fusion de la feuille synthétique 2, de préférence des températures de l'ordre de 150° ou même supérieures à 180°. Pour éviter des déformations et des tensions dans la feuille 2, la chaleur est simultanément appliquée depuis chaque côté de la feuille 2. De cette manière, la face externe 20 de la feuille 2 est lissée par moulage contre la surface polie 50. Des moyens supplémentaires peuvent être prévus pour refroidir rapidement la feuille 2 après l'opération de pressage à chaud.

Dans une variante nouvelle et non illustrée, la feuille synthétique 2 lissée est obtenue par giclage ou enduction d'un vernis acrylique ou d'un autre revêtement synthétique contre la plaque de lissage 5. Si nécessaire, la plaque de pressage 8 est abaissée après giclage ou enduction de manière à uniformiser l'épaisseur de la couche de vernis. Aucun apport de chaleur n'est nécessaire pour le durcissement du vernis. On obtient ainsi une fine couche de vernis suffisamment lisse et uniforme pour servir de couche externe 1, 2.

Dans l'art antérieur, la feuille 2 était ensuite décollée de la plaque de lissage 5, puis transportée sur la machine de laminage à froid qui peut éventuellement se trouver dans une autre usine. On procédait de la même manière pour la feuille synthétique 1. Les feuilles 1, 2 étaient souvent abîmées durant le transport entre la machine de lissage et la machine de laminage pressage à froid. Les feuilles peuvent se rayer, et des poussières ou des impuretés risquent de se coller sur les faces externes 10, respectivement 20. Ces impuretés créent des marques dans la surface 10, 20 lors du laminage par pressage à froid. En outre, il est difficile de plaquer sans bulle d'air les feuilles 1 et 2, contre les plaques de pressage de la presse à froid. Ces bulles d'air sont évidemment néfastes pour la planéité de la carte obtenue.

Dans une première variante de l'invention, ces problèmes sont résolus grâce aux étapes du procédé illustrées sur les figures 4a, 5a et 6a. Après lissage, la plaque de pressage 8 est relevée (figure 4a), mais la feuille 2 n'est pas décollée de la plaque métallique de lissage 5. De la même façon, la feuille supérieure 1 n'est pas décollée de la plaque de lissage correspondante 4. Les feuilles 1, 2 restent plaquées sur les plaques de lissage 4, 5 entre les opérations de lissage et les opérations de laminage. Si les feuilles synthétiques doivent être transportées sur une autre machine, les plaques de lissage 4, 5 sont démontées et transportées avec les feuilles synthétiques. De cette manière, les faces externes 10, 20 restent complètement protégées des impuretés et des rayures.

Le laminage est effectué en superposant les diverses couches 1,2,3,6,7 constituant le laminé de la manière appropriée (figure 5a), les couches externes 1 et 2 restant sur leurs plaques de lissage respectives 4 et 5. L'empilage de couches avec les plaques 4 et 5 est ensuite comprimé entre deux plaques 9 dans une presse à froid (figure 6a). Ce n'est qu'après cette opération de laminage à froid et durcissement du liant que les plaques de lissage 4, 5 sont finalement décollées (non représenté).

Après le retrait des plaques de lissage 4, 5, l'empilage de couches obtenu peut si nécessaire être découpé par des méthodes connues aux dimensions de la carte prescrites.

Les figures 2b, 3b et 4b illustrent une variante des étapes de lissage par pressage à chaud. Ces étapes peuvent être utilisées, à la place des étapes illustrées par les figures 2a, 3a et 4a, notamment pour la fabrication de cartes à puce comportant des composants électroniques d'une certaine épaisseur. Dans ce cas, comme on le voit sur la figure 2b, on utilisera de préférence une plaque de pressage 8' avec des portions en saillie, ici deux portions 81, 82. Lorsque la plaque de pressage 8' est abaissée contre la plaque de lissage 5, les portions en saillie pénètrent et marquent la face interne 21 de la feuille 2 (figure 3b). La plaque de pressage 8' fonctionne en fait comme un poinçon d'étampage qui repousse ou découpe certaines portions de la feuille synthétique 2. Les moyens de chauffage 90 permettent de ramollir la feuille synthétique 2. Dans cet exemple, les deux portions en saillie 81 et 82 illustrées ont une hauteur différente, en sorte que la saillie 81 ne fait que pénétrer peu profondément dans la feuille synthétique 2 tandis que la saillie 82, plus haute, traverse complètement la feuille. Si nécessaire, la saillie 82 peut être munie de bords coupants afin de découper proprement la feuille synthétique 2. Dans une variante, la saillie 82 peut être remplacée par une lame en saillie présentant uniquement une surface de contact coupante avec la feuille 2.

Outre des saillies 81, 82, la plaque de pressage 8' peut également comporter une structure en relief tri-dimensionnel. Cette structure permet de réduire les tensions et déformations dues au pressage de la feuille sysnthétique 2.

On voit sur la figure 4b l'empreinte laissée par la plaque de pressage 8' dans la feuille synthétique 2. La saillie 81 n'a laissé qu'un évidement 21 peu profond sur la face interne 21, tandis que l'ouverture 22 laissée par la saillie 82 traverse la feuille synthétique 2. L'évidement 21 aura été prévu en regard d'un composant électronique monté ultérieurement dans la carte, et permet d'utiliser des composants assez épais sans provoquer de renflement dans les faces externes 10, 20 de la carte à puce terminée. L'ouverture 22 permet par exemple d'accéder aux contacts d'un composant monté dans la carte. Il va de soi qu'un nombre quelconque d'évidements et/ou d'ouvertures peut être prévu selon les besoins sur les deux faces externes de la carte à puce.

La feuille synthétique 2 ainsi lissée et étampée est laminée comme dans les figures 5a et 6a avec les autres couches constituant la carte terminée. Il va de soi que des évidements ou ouvertures similaires peuvent également être prévus dans l'autre feuille externe 1. Une opération supplémentaire de soudage, de connexion et/ou de fixation de composants supplémentaires dans l'ouverture 22 peut éventuellement être prévue.

Les figures 2c à 7c illustrent des étapes de fabrication de carte à puce selon une troisième variante de l'invention. Ces étapes peuvent remplacer les étapes décrites ci-dessus respectivement en rapport avec les figures 2a à 6a. Dans cette variante, la feuille synthétique 2 est préalablement découpée au cours d'opérations non illustrées aux endroits appropriés 24 afin de laisser passer les contacts de connexion 34 d'un composant électronique 31. La feuille synthétique 2 est positionnée comme précédemment sur la plaque de lissage métallique polie 5, et le composant électronique 31 est placé dans l'ouverture 24 avec ses contacts de connexion 34 posés sur la plaque 5. Une deuxième feuille synthétique 2' est ensuite appliquée par-dessus la feuille 2. La deuxième feuille 2' présente également des ouvertures 24' légèrement plus petites que les ouvertures 24, mais placées aux mêmes endroits, de façon à ce que la feuille 2' recouvre certaines portions du circuit 31. Il est possible de modifier légèrement l'ordre de ces opérations en insérant préalablement le ou les composants 31 dans les ouvertures correspondantes 24' de la feuille 2'. Il suffit ensuite d'appliquer en une seule opération la feuille 2' munie des composants 31 par-dessus la feuille 2.

La deuxième feuille synthétique 2' peut être dans le même matériau que la première feuille 2 ou dans un matériau différent. Elle prévient l'enfoncement du composant 31 vers l'intérieur de la carte afin de maintenir les contacts 34 à fleur de la face externe 20. En outre, la deuxième feuille 2' améliore l'étanchéité de l'ouverture 24, 24' autour du composant 31.

Sur la figure 3c, une pression est appliquée aux couches 2, 2' par la plaque de pressage 8" et la plaque de lissage 5, afin de lisser la face externe 20. La plaque de pressage 8" comporte un logement 83 afin d'éviter l'écrasement du circuit 31. Des moyens de chauffage 90' sont prévus pour ramollir la feuille 2 et également pour faire fusionner les deux feuilles synthétiques 2, 2'. La température et la durée de chauffage utilisées seront choisies de manière à prévenir tout risque de destruction du composant 31. Des moyens non représentés, par exemple des ailettes de radiateur ou un courant d'air, peuvent être prévus pour refroidir le composant 31 au cours de cette opération de chauffage. Si, selon le composant choisi, il est impossible de chauffer suffisamment les feuilles 2, 2' pour les faire suffisamment fusionner, on utilisera de préférence une feuille 2' adhésive double ou une couche de colle ou de résine entre les deux couches 2, 2'.

Sur la figure 4c, la plaque de pressage 8" est ensuite relevée, tandis que les deux feuilles 2, 2' et le composant 31 restent sur la plaque de lissage 5. Des fils de connexion 36 peuvent être soudés à ce moment afin de relier le composant électronique 31 avec d'autres composants dans la carte à puce, par exemple avec une bobine. Un liant 6' est ensuite versé par-dessus la couche 2'. Selon la fluidité du liant choisi, on emploiera un cadre de positionnement autour de la carte (non représenté). Le liant peut par exemple être constitué par un des matériaux mentionnés à titre d'exemple ci-dessus. Il est cependant naturellement possible d'utiliser, comme illustré sur les variantes précédentes, un liant sous forme de feuille solide ou une feuille adhésive double-face.

Les autres couches du laminé sont ensuite appliquées (figure 5c). Dans cet exemple, seule la feuille externe 1 avec sa plaque de lissage 4 est appliquée par-dessus la couche de liant 6'. Cette feuille a été préalablement lissée par pressage à chaud sur la plaque 4. Naturellement, d'autres couches peuvent être prévues, par exemple une couche de circuit imprimé avec d'autres composants électroniques. Divers composants électroniques peuvent être noyés dans la couche de liant 6' avant durcissement. Au cours de l'étape illustrée sur la figure 6c, une pression est appliquée par les plaques 9 sur l'empilage de couches obtenu. Le surplus de liant 6' peut s'écouler latéralement au cours de cette étape.

La figure 7c illustre schématiquement la carte obtenue après durcissement du liant, décollage des plaques de lissage 4 et 5 et éventuellement découpage. Ce procédé permet d'obtenir des faces externes 10, 20 parfaitement planes et à fleur avec les contacts 34 du composant 31.

Les figures 2d et 3d illustrent une variante des étapes de lissage par pressage à chaud d'une feuille déjà munie d'un composant électronique 31. Ces étapes peuvent remplacer les étapes illustrées par les figures 2c et 3c de la troisième variante. Le composant 31 est ici maintenu à fleur de la face externe 20 grâce à sa portion 35 de forme tronconique. D'autres systèmes d'attache mécanique, par exemple n'importe quelle autre forme de saillie proéminente sur la surface latérale du composant 31, peut naturellement être imaginée. Le composant 31 est tout d'abord placé sur la plaque de lissage 5, puis la feuille synthétique 2 est enfilée par-dessus le composant 31 en forçant un peu au niveau de l'ouverture 24 préalablement découpée dans la feuille 2. Au cours de l'étape illustrée par la figure 3e, la plaque de pressage 8" est abaissée de manière à exercer une pression sur la feuille synthétique 2 qui est simultanément fondue grâce aux moyens de chauffage 90'. De cette manière, l'ouverture 24 s'adapte à la forme tronconique 35 du composant 31; celui-ci ne peut plus être enfoncé vers l'intérieur de la carte. Le laminage à froid de la feuille synthétique 2 ainsi lissée et munie d'un circuit 31 peut ensuite être effectué de la manière décrite sur les figures 4a à 6a ou de la manière décrite sur les figure 4c à 6c. Par rapport à la variante précédente, cette solution permet d'économiser une feuille synthétique 2' et éventuellement de réduire l'épaisseur de la carte.

Bien que ci-dessus on ait surtout illustré un procédé de fabrication de cartes une-par-une, toutes les variantes s'appliquent aussi à la fabrication simultanée de plusieurs cartes à partir de feuilles 1, 2, 2' de dimensions suffisantes, qui seront découpées au cours d'une dernière opération non représentée. Une fabrication en continu à partir de rouleaux de feuilles, par exemple de feuilles PVC, est aussi tout à fait imaginable. Dans ce cas, les rouleaux dévidés sont tout d'abord pressés à chaud par portions successives, une portion correspondant à une ou plusieurs cartes individuelles. Les portions ainsi lissées sont ensuite laminées à froid au-dessus de la plaque polie utilisée pour le pressage à chaud, de manière similaire aux figures 4 à 7.

Le lissage à chaud a été discuté ci-dessus principalement en relation avec la couche inférieure 2. Dans certaines applications, seule une des deux faces 10, 20 de la carte nécessite une planéité parfaite. C'est par exemple le cas si une seule des faces de la carte doit être ultérieurement imprimée ou munie par exemple d'une zone de stockage magnétique ou optique (code-barre) ou de contacts de connexion. Généralement toutefois, il est nécessaire et préférable d'utiliser des feuilles synthétiques lissées pour les deux faces 1, 2 de la carte. Dans ce cas, la feuille supérieure 1 sera traitée comme la feuille inférieure 2.

De nombreux moyens peuvent être imaginés pour le transport des feuilles synthétiques 1 et 2 lissées jusqu'à la machine de laminage et pour les superposer en vue de les laminer. Le lissage des feuilles et leur laminage peuvent être effectués en des endroits et à des moments très différents, à condition de pouvoir les stocker et les transporter avec les plaques de lissage 4, 5. La figure 8 illustre une possibilité avantageuse utilisant une seule presse pour le lissage des feuilles synthétiques 1 et 2 et pour leur laminage avec les autres couches. Les deux feuilles 1, respectivement 2 sont préalablement lissées contre deux plaques de lissage polies 4, respectivement 5, placées côte-à-côte. Une plaque de pressage 8 non représentée et des moyens de chauffage 90 non représentés sont mis en oeuvre pour lisser les surfaces 10, 20. Cette disposition permet de chauffer et d'appliquer une pression simultanément sur les deux feuilles 1 et 2. Il est possible d'utiliser une plaque de pressage 8 commune, de dimension double, ou au moins deux plaques distinctes pour lisser les deux feuilles synthétiques 1, 2.

Après lissage, les feuilles sont refroidies puis les couches intermédiaires 7, 3 et 6 sont positionnées au-dessus de la couche inférieure 2. La feuille supérieure 1 et sa plaque de lissage 4 sont ensuite retournées au-dessus de l'empilage de couches intermédiaires en les faisant pivoter, à la manière d'un livre que l'on referme, autour d'une charnière 41. La charnière 41 est de préférence une charnière double ou un autre type de charnière permettant de superposer les deux feuilles 1 et 2 sans décalages. Afin de lier les couches ensemble, une pression est appliquée par l'intermédiaire des plaques de pressage 9 sur les deux plaques de lissage 4, 5 refermées comme la couverture d'un livre. Pour empêcher le glissement de la feuille 1 lorsque la plaque de lissage 4 se referme, on veillera à utiliser une plaque de lissage 4 munie d'une surface supérieure polie légèrement adhésive ou chargée d'électricité statique. Des moyens d'aspiration peuvent éventuellement être prévus pour plaquer la feuille 1 contre la surface de lissage, ces moyens agissant alors à travers des trous à travers la plaque de lissage 4 dans des zones ne correspondant pas aux cartes découpées. Cette mesure peut en particulier s'avérer nécessaire si des feuilles 1, 2 de grande dimension, correspondant à plusieurs cartes, sont laminées à chaque opération. Dans une variante, plusieurs feuilles séparées, correspondant chacune à plusieurs cartes, peuvent être laminées simultanément.

Dans toutes les variantes, les plaques de lissage 4 et 5 peuvent être réalisées en n'importe quel matériau suffisamment lisse, par exemple en acier inoxydable ou en Téflon (marque déposée). La surface de lissage est de préférence parfaitement polie et/ou satinée. Dans une variante, il est aussi possible d'utiliser des plaques de lissage 4, 5 présentant au moins une portion légèrement rugueuse ou granulée. Selon la texture donnée aux aspérités de la portion rugueuse ou granulée, il est possible d'obtenir des surfaces externes 10, 20 d'aspect varié. Par exemple, il est possible de fabriquer des cartes avec une face parfaitement lisse à l'exception de certaines portions, correspondant par exemple à un texte ou à un logo, d'aspect mat ou rugueux. En outre, les plaques de lissage peuvent pour certaines applications comporter des portions en saillie destinées à mouler dans au moins une face de la carte un évidement qui pourra par exemple être utilisé pour insérer une photo, un hologramme ou un élément de sécurité quelconque.

Les différentes variantes discutées ci-dessus peuvent dans une large mesure être combinées entre elles selon les besoins. Par exemple, une plaque de pressage 8' constituant un poinçon d'étampage (cf. figure 2b - 3b - 4b) peut être utilisée avec toutes les variantes au lieu de plaques 8, 8' planes.

## Revendications

1. Procédé de fabrication de cartes laminées, par pressage a froid de différentes couches (1, 6, 6', 3, 7, 2, 2') et éléments (31, 32, 33) entre une première plaque de lissage (4) et une seconde plaque (5) comprenant une opération de lissage d'au moins une première feuille synthétique (1) contre la première plaque de lissage (4), **caractérisé en ce qu'**il comprend les étapes suivantes:
- enlèvement de ladite première plaque de lissage (4) portant ladite première feuille synthétique (1) de la presse de lissage,
- introduction de ladite première plaque de lissage (4) portant ladite première feuille synthétique (1) dans une presse de laminage,
- laminage d'au moins une carte en utilisant ladite première feuille synthétique (1) comme couche externe sur ladite presse de laminage par pressage des différentes couches (1, 6, 6', 3, 7, 2, 2') et éléments (31, 32, 33) entre ladite première plaque de lissage (4) et la seconde plaque (5).

2. Procédé de fabrication de cartes laminées selon la revendication précédente, **caractérisé en ce qu'**il comprend en outre une opération de lissage d'une seconde feuille synthétique (2) contre une seconde plaque de lissage (5) afin d'améliorer l'état de surface de la face externe (20) de ladite seconde feuille synthétique constituant une seconde couche externe de ladite carte, et **en ce que** ladite opération de laminage, effectuée par pressage à froid des différentes couches (1,6,6',3,7,2,2') et éléments (31,32,33) constituant la carte laminée, est effectuée entre ladite première plaque de lissage (4) et ladite seconde plaque de lissage (5).

3. Procédé de fabrication de cartes laminées selon l'une des revendications précédentes, **caractérisé en ce que** la ou lesdites opérations de lissage de feuille synthétique sont effectuées par pressage à chaud de la feuille synthétique (1, respectivement 2) entre sa plaque de lissage (4, respectivement 5) et une plaque de pressage (8).

4. Procédé de fabrication de cartes laminées selon l'une des revendications précédentes, **caractérisé en ce que** la ou lesdites opérations de lissage de feuille synthétique sont effectuées par giclage ou enduction d'un revêtement synthétique contre une plaque de lissage (4, respectivement 5).

5. Procédé de fabrication de cartes laminées selon l'une des revendications précédentes, caractérisé en ce la ou lesdites opérations de lissage de feuilles synthétiques (1, 2) sont effectuées avec la même presse que ladite opération de laminage.

6. Procédé de fabrication de cartes laminées selon l'une des revendications précédentes, dans lequel la ou lesdites feuilles synthétiques (1, 2) ont une taille correspondant à plusieurs cartes, ledit procédé comportant à la fin une opération de découpe de cartes individuelles.

7. Procédé de fabrication de cartes laminées selon la revendication précédente, dans lequel la ou lesdites feuilles synthétiques (1, 2) sont constituées chacune par un ruban synthétique continu.

8. Procédé de fabrication de cartes laminées selon l'une des revendications précédentes, dans lequel la face d'au moins une desdites plaques de lissage (4, resp. 5) en regard de la feuille synthétique correspondante (1, resp. 2) comporte un motif tridimensionnel destiné à être imprimé en relief sur la feuille synthétique correspondante.

9. Procédé de fabrication de cartes laminées selon la revendication précédente, dans lequel ledit motif tridimensionnel comporte un polissage selon des directions ou avec des rugosités variables de manière à imprimer un motif visible sur la feuille synthétique (1, 2) correspondante.

10. Procédé de fabrication de cartes laminées selon l'une des revendications précédentes, dans lequel au moins une des premières (4) et/ou deuxièmes plaques de lissage (5) est en acier inoxydable poli ou satiné.

11. Procédé de fabrication de cartes laminées selon l'une des revendications précédentes, comportant une étape préalable d'impression sur au moins une des premières et/ou deuxièmes feuilles synthétiques (1, 2).

12. Procédé de fabrication de cartes laminées selon l'une des revendications précédentes, dans lequel la face interne (11, resp. 21) d'au moins une desdites feuilles synthétiques (1, resp. 2) est préalablement usinée avec au moins un évidement destiné à loger un ou des composants (31, 32, 33) contenus dans la carte.

13. Procédé de fabrication de cartes laminées selon l'une des revendications 1 à 11, dans lequel au cours d'au moins une desdites opérations de lissage, au moins une desdites feuilles synthétiques (1, resp. 2) est pressée entre la plaque de lissage correspondante (4, resp. 5) et une plaque de pressage (8') comportant une structure tridimensionnelle en relief.

14. Procédé de fabrication de cartes laminées selon la revendication précédente, dans lequel au cours d'au moins une desdites opérations de lissage, au moins une desdites feuilles synthétiques (1, resp. 2) est pressée entre la plaque de lissage correspondante (4, resp. 5) et une plaque de pressage (8') comportant au moins une portion en saillie (81) destinée à mouler dans la face interne (11, resp 21) de la feuille synthétique un évidement (21) et/ou une ouverture (22) correspondant à un composant électronique (31, 32) de la carte terminée.

15. Procédé de fabrication de cartes laminées selon l'une des revendications précédentes, dans lequel un composant électronique (31) est préalablement positionné avec ses contacts de connexion (34) à fleur de la face externe (10, resp. 20) d'au moins une desdites feuilles synthétiques (1, resp. 2).

16. Procédé de fabrication de cartes laminées selon la revendication précédente, dans lequel des moyens de maintien (2'; 35) sont prévus pour maintenir les contacts de connexion (34) dudit composant électronique (31) à fleur de la face externe (10, resp. 20) de la feuille synthétique correspondante (1, resp. 2).

17. Procédé de fabrication de cartes laminées selon la revendication précédente, dans lequel lesdits moyens de maintien sont constitués par une feuille synthétique supplémentaire (2').

18. Procédé de fabrication de cartes laminées selon la revendication 16, dans lequel lesdits moyens de maintien sont constitués par une portion en saillie (35) sur la face latérale du composant électronique (31).

19. Procédé de fabrication de cartes laminées selon l'une des revendications précédentes, comportant entre les opérations de lissage et de laminage une opération supplémentaire de soudage de composants électroniques (31 ).

20. Procédé de fabrication de cartes laminées selon l'une des revendications 5 à 19, dans lequel lesdites premières et deuxièmes feuilles synthétiques (1, 2) sont lissées sur des plaques de lissage placées côte à côte et articulées de manière à pouvoir se refermer comme la couverture d'un livre pour superposer lesdites feuilles synthétiques (1, 2) afin d'effectuer ladite opération de laminage des différentes couches (1, 6, 6', 3, 7, 2, 2') et éléments (31, 32, 33) constituant la carte laminée.

## Claims

1. Method for making laminated cards, by the cold pressing of various layers (1, 6, 6', 3, 7, 2, 2') and elements (31, 32, 33) between a first smoothing plate (4) and a second plate (5) comprising a smoothing operation of at least one first synthetic sheet (1) against a first smoothing plate (4),.**characterized in that** it comprises the following operations:
- removing of said first smoothing plate (4) carrying said first synthetic sheet (1) from the smoothing press,
- introducing of said first smoothing plate (4) carrying said first synthetic sheet (1) in a laminating press,
- lamination of at least one card, using said first synthetic sheet (1) as the outer layer on said laminating press by pressing of the various layers (1, 6, 6', 3, 7, 2, 2') and elements (31, 32, 33) between said first smoothing plate (4) and the second plate (5).

2. Method for making laminated cards according to the preceding claim, **characterized in that** it comprises, furthermore, an operation of smoothing a second synthetic sheet (2) against a second smoothing plate (5), in order to improve the surface state of the outer face (20) of said second synthetic sheet constituting a second outer layer of said card, and **in that** said laminating operation, carried out by the cold pressing of the various layers (1, 6, 6', 3, 7, 2, 2') and elements (31, 32, 33) constituting the laminated card, is carried out between said first smoothing plate (4) and said second smoothing plate (5).

3. Method for making laminated cards according to one of the preceding claims, **characterized in that** said operation or operations of smoothing a synthetic sheet are carried out by the hot pressing of the synthetic sheet (1, respectively 2) between its smoothing plate (4, respectively 5) and a pressing plate (8).

4. Method for making laminated cards according to one of the preceding claims, **characterized in that** said operation or operations of smoothing a synthetic sheet are carried out by the spraying or coating of a synthetic covering against a smoothing plate (4, respectively 5).

5. Method for making laminated cards according to one of the preceding claims,
**characterized in that** said operation or operations of smoothing synthetic sheets (1, 2) are carried out with the same press as said laminating operation.

6. Method for making laminated cards according to one of the preceding claims, wherein said synthetic sheet or sheets (1, 2) have a size corresponding to a plurality of cards, said method comprising finally an operation of cutting out individual cards.

7. Method for making laminated cards according to the preceding claim, wherein said synthetic sheet or sheets (1, 2) each consist of a continuous synthetic ribbon.

8. Method for making laminated cards according to one of the preceding claims, wherein the face of at least one of said smoothing plates (4, respectively 5) which is opposite the corresponding synthetic sheet (1, respectively 2) comprises a three-dimensional pattern intended to be printed in relief on the corresponding synthetic sheet.

9. Method for making laminated cards according to the preceding claim, wherein said three-dimensional pattern comprises polishing in variable directions or with variable roughnesses, so as to imprint a visible pattern on the corresponding synthetic sheet (1, 2).

10. Method for making laminated cards according to one of the preceding claims, wherein at least one of the first (4) and/or second (5) smoothing plates is made of polished or satin-finished stainless steel.

11. Method for making laminated cards according to one of the preceding claims, comprising a prior step of printing on at least one of the first and/or second synthetic sheets (1, 2).

12. Method for making laminated cards according to one of the preceding claims, wherein the inner face (11, respectively 21) of at least one of said synthetic sheets (1, respectively 2) is previously machined with at least one recess intended for receiving a component or components (31, 32, 33) contained in the card.

13. Method for making laminated cards according to one of Claims 1 to 11, wherein, during at least one of said smoothing operations, at least one of said synthetic sheets (1 or 2) is pressed between the corresponding smoothing plate (4 or 5) and a pressing plate (8') comprising a three-dimensional structure in relief.

14. Method for making laminated cards according to the preceding claim, wherein, during at least one of said smoothing operations, at least one of said synthetic sheets (1, respectively 2) is pressed between the corresponding smoothing plate (4, respectively 5) and a pressing plate (8') comprising at least one projecting portion (81) intended for moulding in the inner face (11, respectively 21) of the synthetic sheet a recess (21) and/or an orifice (22) corresponding to an electronic component (31, 32) of the finished card.

15. Method for making laminated cards according to one of the preceding claims, wherein an electronic component (31) is previously positioned with its connecting contacts (34) flush with the outer face (10, respectively 20) of at least one of said synthetic sheets (1, respectively 2).

16. Method for making laminated cards according to the preceding claim, wherein holding means (2'; 35) are provided for holding the connecting contacts (34) of said electronic component (31) flush with the outer face (10, respectively 20) of the corresponding synthetic sheet (1, respectively 2).

17. Method for making laminated cards according to the preceding claim, wherein said holding means consist of an additional synthetic sheet (2').

18. Method for making laminated cards according to Claim 16, wherein said holding means consist of a projecting portion (35) on the lateral face of the electronic component (31).

19. Method for making laminated cards according to one of the preceding claims, comprising, between the smoothing and laminating operations, an additional operation of welding electronic components (31).

20. Method for making laminated cards according to one of Claims 5 to 19, wherein said first and second synthetic sheets (1, 2) are smoothed on smoothing plates placed side by side and are articulated so as to be capable of being closed in the same way as the cover of a book, so as to superpose said synthetic sheets (1, 2) in order to carry out said operation of laminating the various layers (1, 6, 6', 3, 7, 2, 2') and elements (31, 32, 33) forming the laminated card.

## Patentansprüche

1. Herstellungsverfahren für laminierte Karten durch Kaltpressen verschiedener Schichten (1, 6, 6', 3, 7, 2, 2') und Elemente (31, 32, 33) zwischen einer ersten Glättplatte (4) und einer zweiten Platte (5), einen Arbeitsgang des Glättens von zumindest einer ersten Kunststofffolie (1) an der ersten Glättplatte (4) umfassend, **dadurch gekennzeichnet**, das es die folgenden Arbeitsschritte umfasst:
- Entnahme dieser diese erste Kunststofffolie (1) tragenden ersten Glättplatte (4) aus der Glättpresse,
- Einführung dieser diese erste Kunststofffolie (1) tragenden ersten Glättplatte (4) in eine Laminierpresse,
- Laminieren zumindest einer Karte unter Verwendung dieser ersten Kunststofffolie (1) als äusserer Schicht durch Pressen der verschiedenen Schichten (1, 6, 6', 3, 7, 2, 2') und Elemente (31, 32, 33) zwischen dieser ersten Glättplatte (4) und der zweiten Platte (5) auf dieser Laminierpresse.

2. Herstellungsverfahren für laminierte Karten nach dem vorangehenden Anspruch, **dadurch gekennzeichnet, dass** es ausserdem einen Arbeitsgang des Glättens einer zweiten Kunststofffolie (2) an einer zweiten Glättplatte (5) umfasst, um den Oberflächenzustand der Aussenseite (20) dieser zweiten Kunststofffolie zu verbessern, die eine zweite Aussenschicht dieser Karte darstellt, und dadurch, dass dieses durch Kaltpressen der verschiedenen Schichten (1, 6, 6', 3, 7, 2, 2') und Elemente (31, 32, 33) der laminierten Karte ausgeführte Laminieren zwischen dieser ersten Glättplatte (4) und dieser zweiten Glättplatte (5) stattfindet.

3. Herstellungsverfahren für laminierte Karten nach einem der vorangehenden Ansprüche, **dadurch gekennzeichnet, dass** dieses Glätten von Kunststofffolien durch Heisspressen der Kunststofffolie (1 bzw. 2) zwischen ihrer Glättplatte (4 bzw. 5) und einer Pressplatte (8) stattfindet.

4. Herstellungsverfahren für laminierte Karten nach einem der vorangehenden Ansprüche, **dadurch gekennzeichnet, dass** dieses Glätten von Kunststofffolien durch Aufschleudern oder Aufstreichen einer Kunststoffbeschichtung auf eine Glättplatte (4 bzw. 5) stattfindet.

5. Herstellungsverfahren für laminierte Karten nach einem der vorangehenden Ansprüche, **dadurch gekennzeichnet, dass** dieses Glätten von Kunststofffolien (1, 2) auf der gleichen Presse wie dieses Laminieren stattfindet.

6. Herstellungsverfahren für laminierte Karten nach einem der vorangehenden Ansprüche, in dem diese Kunststofffolie(n) (1, 2) eine mehreren Karten entsprechende Grösse haben, wobei dieses Verfahren am Ende ein Ausschneiden von einzelnen Karten umfasst.

7. Herstellungsverfahren für laminierte Karten nach dem vorangehenden Anspruch, in dem diese Kunststofffolie(n) (1, 2) aus je einem kontinuierlichen Kunststoffband bestehen.

8. Herstellungsverfahren für laminierte Karten nach einem der vorangehenden Ansprüche, in dem die der entsprechenden Kunststofffolie (1 bzw. 2) zugewandte Seite zumindest einer dieser Glättplatten (4 bzw. 5) ein dreidimensionales Muster umfasst, das räumlich in die entsprechende Kunststofffolie eingedruckt werden soll.

9. Herstellungsverfahren für laminierte Karten nach dem vorangehenden Anspruch, indem dieses dreidimensionale Muster ein Polieren in verschiedenen Richtungen bzw. mit verschiedenen Rauigkeiten umfasst, um ein sichtbares Muster auf die entsprechende Kunststofffolie (1, 2) aufzudrucken.

10. Herstellungsverfahren für laminierte Karten nach einem der vorangehenden Ansprüche, in dem zumindest eine der ersten (4) und/oder der zweiten Glättplatten (5) aus poliertem oder satiniertem, nichtrostendem Stahl besteht.

11. Herstellungsverfahren für laminierte Karten nach einem der vorangehenden Ansprüche, einen vorausgehenden Schritt des Bedruckens von zumindest einer der ersten und/oder zweiten Kunststofffolien (1, 2) umfassend.

12. Herstellungsverfahren für laminierte Karten nach einem der vorangehenden Ansprüche, in dem die Innenseite (11 bzw. 21) von zumindest einer dieser Kunststofffolien (1 bzw. 2) im Voraus maschinell mit zumindest einer Höhlung versehen worden ist, die dafür bestimmt ist, einen Bauteil bzw. Bauteile (31, 32, 33) aufzunehmen, die in der Karte enthalten sind.

13. Herstellungsverfahren für laminierte Karten nach einem der Ansprüche 1 bis 11, in dem im Verlauf von zumindest einem dieser Arbeitsgänge des Glättens zumindest eine dieser Kunststofffolien (1 bzw. 2) zwischen der entsprechenden Glättplatte (4 bzw. 5) und einer Pressplatte (8') gepresst wird, die eine erhabene dreidimensionale Struktur enthält.

14. Herstellungsverfahren für laminierte Karten nach dem vorangehenden Anspruch, in dem im Verlauf von zumindest einem dieser Arbeitsgänge des Glättens zumindest eine dieser Kunststofffolien (1 bzw. 2) zwischen der entsprechenden Glättplatte (4 bzw. 5) und einer Pressplatte (8') gepresst wird, die zumindest einen vorstehenden Abschnitt (81) umfasst, der dafür bestimmt ist, eine Höhlung (21) und/oder eine Öffnung (22), die einem elektronischen Bauteil (31, 32) der fertigen Karte entsprechen, in der Innenseite (11 bzw. 21) der Kunststofffolie zu formen.

15. Herstellungsverfahren für laminierte Karten nach einem der vorangehenden Ansprüche, in dem ein elektronisches Bauteil (31) im Voraus mit seinen Verbindungskontakten (34) bündig zur Aussenseite (10 bzw. 20) von zumindest einer dieser Kunststofffolien (1 bzw. 2) positioniert wird.

16. Herstellungsverfahren für laminierte Karten nach dem vorangehenden Anspruch, in dem Halteorgane (2'; 35) vorgesehen sind, um die Verbindungskontakte (34) dieses elektronischen Bauteils (31) mit der Aussenseite (10 bzw. 20) der entsprechenden Kunststofffolie (1 bzw. 2) bündig zu halten.

17. Herstellungsverfahren für laminierte Karten nach dem vorangehenden Anspruch, in dem diese Halteorgane aus einer zusätzlichen Kunststofffolie (2') bestehen.

18. Herstellungsverfahren für laminierte Karten nach Anspruch 16, in dem diese Halteorgane aus einem aus der Seite des elektronischen Bauteils (31) vorspringenden Abschnitt (35) bestehen.

19. Herstellungsverfahren für laminierte Karten nach einem der vorangehenden Ansprüche, das einen zusätzlichen Arbeitsgang des Schweissens von elektronischen Bauteilen (31) zwischen den Arbeitsgängen des Glättens und des Laminierens umfasst.

20. Herstellungsverfahren für laminierte Karten nach einem der Ansprüche 5 bis 19, in dem diese ersten und zweiten Kunststofffolien (1, 2) auf Glättplatten geglättet werden, die nebeneinander angeordnet und gelenkig so miteinander verbunden sind, dass sie sich wie ein Buchdeckel zusammenklappen lassen, um diese Kunststofffolien (1, 2) übereinanderzubringen und diesen Arbeitsgang des Laminierens der verschiedenen Schichten (1, 6', 3, 7, 2, 2') und Elemente (31, 32, 33) der laminierten Karte auszuführen.
